# EUROPEAN PATENT APPLICATION

(11) **EP 4 414 828 A1**
(43) Date of publication of application: **14.08.2024**
(21) Application number: 21961793.3
(22) Date of filing: 28.10.2021
(51) Int. Cl.: G06F 8/60

(54) **CONFIGURATION METHOD AND APPARATUS**

(71) Applicant: Huawei Technologies Co., Ltd., Shenzhen, Guangdong 518129 (CN)
(72) Inventor: HU, Yong, Shenzhen, Guangdong 518129 (CN); DANG, Ling, Shenzhen, Guangdong 518129 (CN)
(74) Representative: Epping - Hermann - Fischer
(86) International application number: PCT/CN2021/126979
(87) International publication number: WO 2023/070426

(57) **Abstract**

This application provides a configuration method and apparatus. The method includes: configuring n processes, where n is an integer greater than or equal to 1; mapping m processes in the n processes to a first component, where m is an integer greater than 0 and less than or equal to n, and the first component is associated with a first port; and generating, based on a preconfigured association relationship, an association relationship between each of m service instances corresponding to the m processes and the first port. Embodiments of this application help simplify a communication management configuration procedure, and help improve configuration efficiency.

## Description

### TECHNICAL FIELD

This application relates to the field of intelligent vehicles, and more specifically, to a configuration method and apparatus.

### BACKGROUND

At present, an automotive electronic network is developing toward multi-bus hybrid network interconnection. In 2003, to avoid compatibility issues between major manufacturers, an open and standardized automotive open system architecture (automotive open system architecture, AUTOSAR) was launched in the automobile field. Automobile manufacturers may develop their own software based on this standard.

To meet more complex requirements of automobiles (for example, autonomous driving, internet of vehicles, and domain control), the industry defines an adaptive automotive open system architecture (adaptive AUTOSAR, AP) is defined based on mature experience of a classic automotive open system architecture (classic AUTOSAR, CP). Communication management (communication management, CM) is a key step in AP configuration, and determines a software architecture of an entire system and a cooperation relationship between software.

Currently, some companies have launched technical solutions for manually creating elements and configuring element properties and association relationships in CM. However, this causes low CM configuration efficiency.

### SUMMARY

This application provides a configuration method and apparatus. This helps simplify a communication management configuration procedure, and helps improve configuration efficiency. According to a first aspect, a configuration method is provided. The method includes: configuring n processes, where n is an integer greater than or equal to 1; mapping m processes in the n processes to a first component, where m is an integer greater than 0 and less than or equal to n, and the first component is associated with a first port; and generating, based on a preconfigured association relationship, an association relationship between each of m service instances corresponding to the m processes and the first port.

In an embodiment of this application, the association relationship between each service instance and the first port may be generated by using the preconfigured association relationship. A user does not need to manually configure the association relationship. This helps simplify a communication management configuration procedure, and helps improve configuration efficiency. With reference to the first aspect, in some implementations of the first aspect, the preconfigured association relationship includes reference information of a process, a port, and a service instance, and a correspondence between the process, the port, and the service instance.

In an embodiment of this application, the preconfigured association relationship may include the reference information of the process, the port, and the service instance, and the correspondence between the process, the port, and the service instance. In this way, the process, the port, and the service instance may be associated by using the reference information and the correspondence. This helps simplify the communication management configuration procedure, and helps improve the configuration efficiency.

In some possible implementations, the reference information of the process may be a process number.

In some possible implementations, the reference information of the port may be a port number. In some possible implementations, the reference information of the service instance may be property information in the service instance. The property information may include one or both of a short name (short name) and deployment (deployment).

With reference to the first aspect, in some implementations of the first aspect, before the generating an association relationship between each of m service instances, corresponding to the m processes, and the first port, the method further includes: generating the m service instances based on a preconfigured service instance, and configuring property information of each of the m service instances.

In an embodiment of this application, the corresponding service instance may be generated by using the preconfigured service instance. The user does not need to manually configure the service instance and the property information of the service instance. This helps simplify the communication management configuration procedure, and helps improve the configuration efficiency.

With reference to the first aspect, in some implementations of the first aspect, the mapping m processes in the n processes to a first component includes: mapping the m processes to a first executable program exe, where a root component of the first executable program exe is a first composite component; and creating a first sub-element of the first composite component, where a type of the first sub-element points to the first component.

In an embodiment of this application, the m processes in the n processes may be mapped to the first component by using the first composite component, so that mapping from a plurality of processes to the first component may be implemented.

With reference to the first aspect, in some implementations of the first aspect, n is greater than or equal to 2, and the n processes are receiver processes.

The configuration method in an embodiment of this application may be applied to a single-sender and multi-receiver scenario (that is, one sender communicates with a plurality of receivers) in CM configuration. A plurality of required service instances may be generated by using the preconfigured service instance, and property information of each service instance may be configured; and/or an association relationship between each of the plurality of required service instances and the first port may be generated by using the preconfigured association relationship. The user does not need to perform manual configuration. This helps simplify the communication management configuration procedure in the single-sender and multi-receiver scenario, and helps improve the configuration efficiency.

In some possible implementations, n is equal to m.

In an embodiment of this application, all the n processes may be mapped to the first component. In this way, when the required service instances are generated, n required service instances may be generated based on the preconfigured service instance, so that all the required service instances may be generated by using the preconfigured service instance. The user does not need to manually create the service instance and configure the property information of the service instance. This helps simplify the communication management configuration procedure in the single-sender and multi-receiver scenario, and helps improve the configuration efficiency.

With reference to the first aspect, in some implementations of the first aspect, the preconfigured service instance includes a first preconfigured service instance and a second preconfigured service instance. The first preconfigured service instance is a service instance for scalable service-oriented middleware over internet protocol SOME/IP communication. The second preconfigured service instance is a service instance for data distribution service DDS communication.

In an embodiment of this application, different service instance templates may be configured in advance for service instances in different communication modes. In this way, when the service instances are generated, the service instances may be generated based on the different service instance templates, and the property information of the service instances may be configured. This helps improve configuration flexibility.

With reference to the first aspect, in some implementations of the first aspect, the property information of each service instance includes one or more of identification information, transport plugin information, deployment information, quality of service configuration information, and end-to-end communication protection information of the service instance.

According to a second aspect, a configuration apparatus is provided. The apparatus includes: a configuration unit, configured to configure n processes, where n is an integer greater than or equal to 1; a mapping unit, configured to map m processes in the n processes to a first component, where m is an integer greater than 0 and less than or equal to n, and the first component is associated with a first port; and a generation unit, configured to generate, based on a preconfigured association relationship, an association relationship between each of m service instances corresponding to the m processes and the first port.

With reference to the second aspect, in some implementations of the second aspect, the preconfigured association relationship includes reference information of a process, a port, and a service instance, and a correspondence between the process, the port, and the service instance. With reference to the second aspect, in some implementations of the second aspect, the generation unit is further configured to: before generating the association relationship between each of the m service instances corresponding to the m processes and the first port, generate the m service instances based on a preconfigured service instance; and configure property information of each of the m service instances.

With reference to the second aspect, in some implementations of the second aspect, the mapping unit is specifically configured to: map the m processes to a first executable program exe, where a root component of the first executable program exe is a first composite component; and create a first sub-element of the first composite component, where a type of the first sub-element points to the first component.

With reference to the second aspect, in some implementations of the second aspect, n is greater than or equal to 2, and the n processes are receiver processes.

With reference to the second aspect, in some implementations of the second aspect, the preconfigured service instance includes a first preconfigured service instance and a second preconfigured service instance. The first preconfigured service instance is a service instance for scalable service-oriented middleware over internet protocol SOME/IP communication. The second preconfigured service instance is a service instance for data distribution service DDS communication.

With reference to the second aspect, in some implementations of the second aspect, the property information of each service instance includes one or more of identification information, transport plugin information, deployment information, quality of service configuration information, and end-to-end communication protection information of the service instance.

According to a third aspect, a configuration apparatus is provided. The apparatus includes: a memory, configured to store computer instructions; and a processor, configured to execute the computer instructions stored in the memory, so that the apparatus performs the method according to the first aspect.

According to a fourth aspect, a terminal device is provided. The terminal device includes the apparatus according to any one of the second aspect or the third aspect.

According to a fifth aspect, a computer program product is provided. The computer program product includes computer program code. When the computer program code is run on a computer, the computer is enabled to perform the method according to the first aspect.

It should be noted that all or a part of the computer program code may be stored in a first storage medium. The first storage medium may be encapsulated together with a processor, or may be encapsulated separately from the processor. This is not specifically limited in embodiments of this application.

According to a sixth aspect, a computer-readable medium is provided. The computer-readable medium stores program code. When the computer program code is run on a computer, the computer is enabled to perform the method according to the first aspect.

According to a seventh aspect, an embodiment of this application provides a chip system. The chip system includes a processor that is configured to invoke a computer program or computer instructions stored in a memory, so that the processor performs the method according to any one of the foregoing aspects.

With reference to the seventh aspect, in a possible implementation, the processor is coupled to the memory through an interface.

With reference to the seventh aspect, in a possible implementation, the chip system further includes the memory. The memory stores the computer program or the computer instructions.

### BRIEF DESCRIPTION OF DRAWINGS

FIG. 1 is a schematic diagram of an adaptive automotive open system architecture;
FIG. 2 is a schematic diagram of a single-sender and multi-receiver scenario;
FIG. 3 is an organization form when one process is in communication with a plurality of processes;
FIG. 4 is another organization form when one process is in communication with a plurality of processes;
FIG. 5 is a schematic diagram of generating a service instance and associating the service instance with a port;
FIG. 6 is another schematic diagram of generating a service instance and associating the service instance with a port;
FIG. 7A and FIG. 7B are schematic flowcharts of a configuration method according to an embodiment of this application;
FIG. 8 is another schematic flowchart of a configuration method according to an embodiment of this application;
FIG. 9 is a schematic block diagram of a configuration apparatus according to an embodiment of this application; and
FIG. 10 is a schematic block diagram of a configuration apparatus according to an embodiment of this application.

### DESCRIPTION OF EMBODIMENTS

The following describes technical solutions of this application with reference to accompanying drawings.

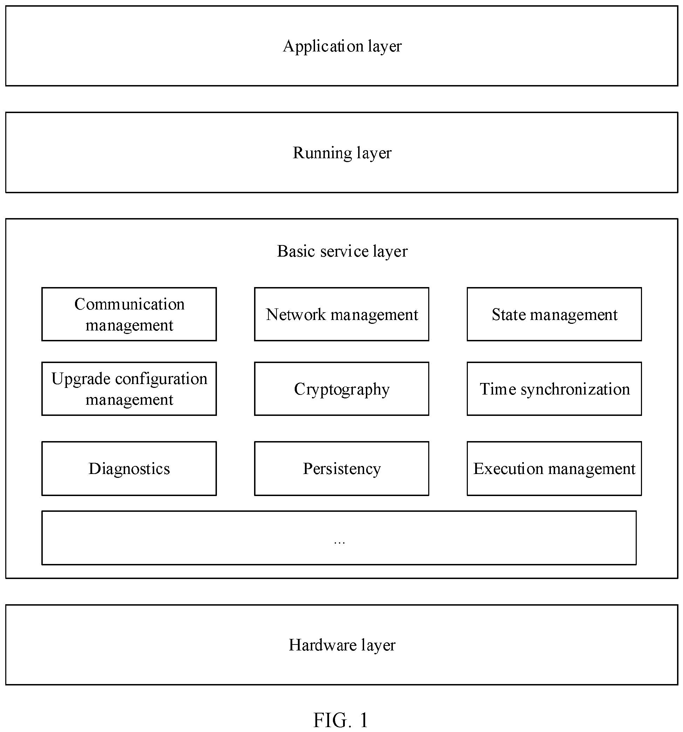

FIG. 1 is a schematic diagram of an adaptive automotive open system architecture. The software architecture may be divided into an application layer, a running layer, a basic service layer, and a hardware layer. The basic service layer includes communication management (communication management, CM), network management (network management), state management (state management), upgrade configuration management (update configuration management), cryptography (cryptography), time synchronization (time synchronization), diagnostics (diagnostics), persistency (persistency), execution management (execution management), and the like. CM is a key step in AP configuration, and determines a software architecture of an entire system and a cooperation relationship between software. In CM configuration, creation, property configuration, and a reference association need to be performed on a plurality of elements.

After hardware, a network structure, a communication interface, and a software structure are configured, CM configuration may be performed on this basis. An important step of CM is communication instantiation. To be specific, a pair of service instances (service instances) used for communication connection are created. Elements that need to be created in this process include: a process (process), an executable program (executable, exe), an instance (instance), an adaptive application component (AdaptiveApplicationSwComponentType, swc), a composite component (CompositionSwComponentType), and the like. Property configuration that needs to be completed includes: an instance identifier (instance ID), transport plugin information (Transport plugin), deployment (deployment), quality of service configuration information (QoS profile), and end-to-end communication protection information (E2EprofileConfiguration) of the instance (instance). Reference associations that need to be completed include: an association between the process and the exe, an association between the exe and the swc, and an association between the instance and the port (port) (instance to port mapping).

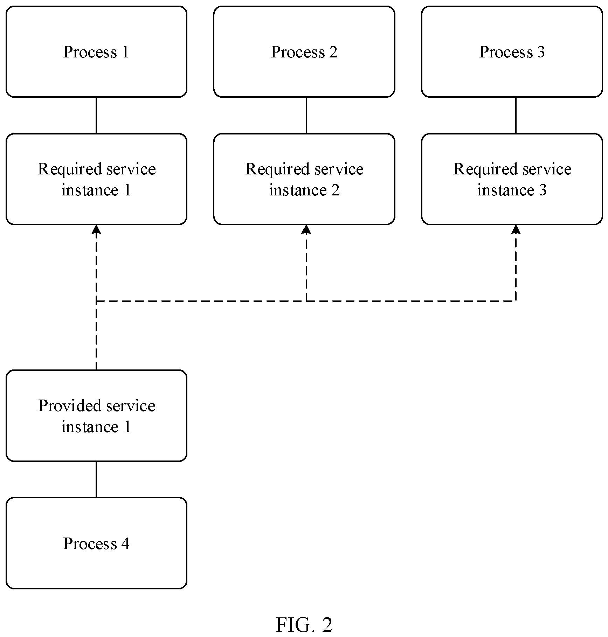

FIG. 2 is a schematic diagram of a single-sender and multi-receiver scenario. When a communication sender and communication receivers are configured, there is generally one provided service instance (provided service instance), and there are a plurality of required service instances (required service instances) corresponding to the provided service instance. In this scenario, the required service instances need to be repeatedly configured for a plurality of times.

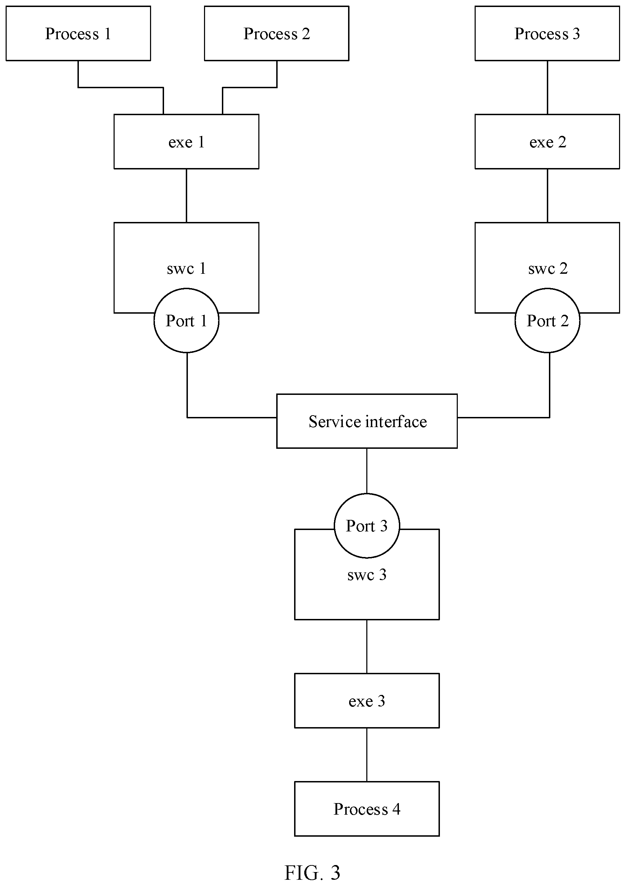

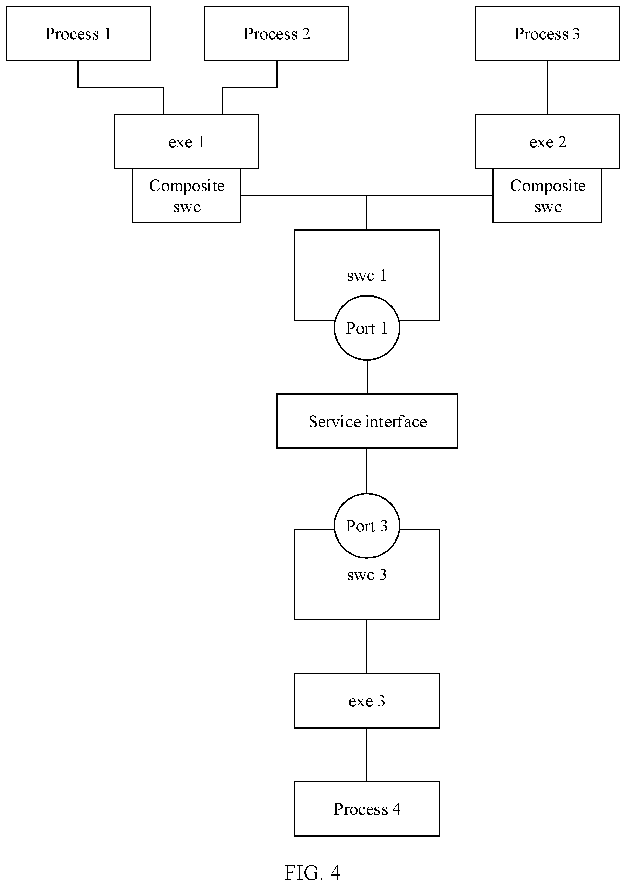

FIG. 3 and FIG. 4 respectively show an organization form when one process is in communication with a plurality of processes. As shown in FIG. 3, each exe has an swc that only belongs to the exe. For example, an exe 1 corresponds to an swc 1, and an exe 2 corresponds to an swc 2. As shown in FIG. 4, for the swc of a same function, a plurality of exes may share the swc by using a composite component. For example, the exe 1 and the exe 2 share the swc 1 by using a composite swc.

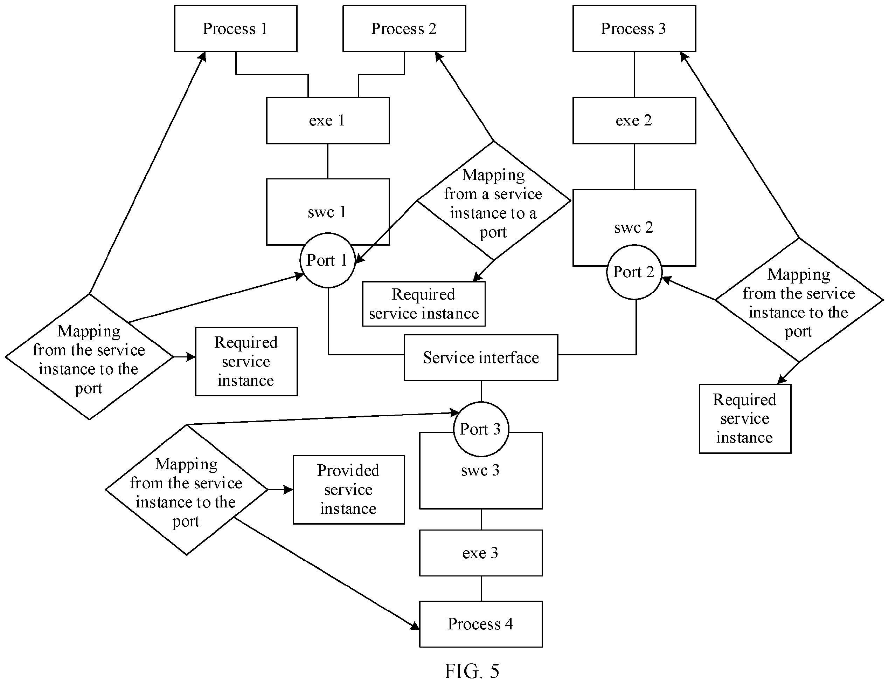

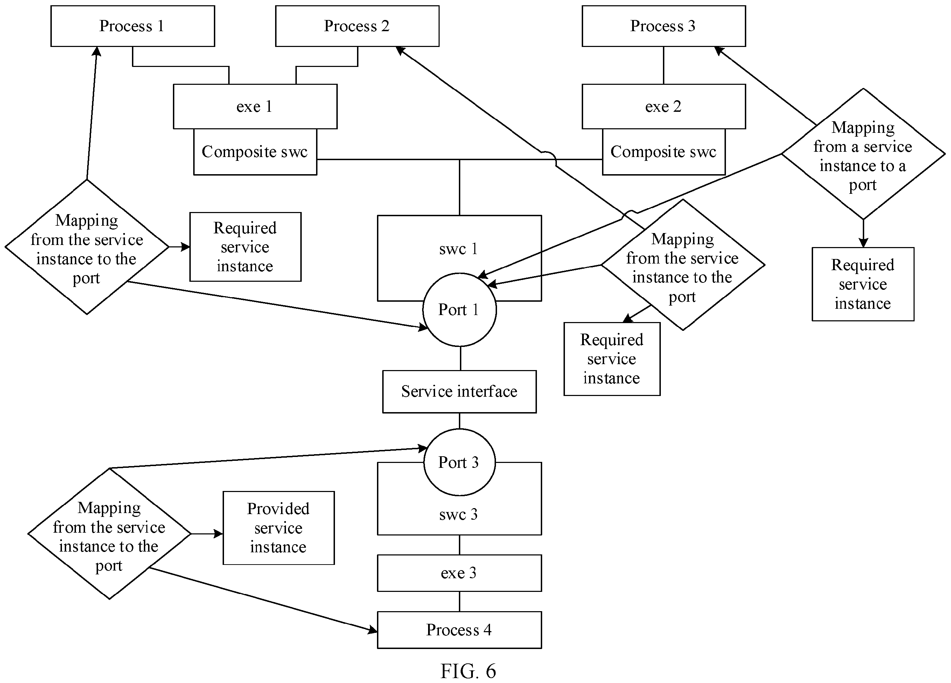

FIG. 5 shows a process of generating a service instance and associating the service instance with a port for the organization form shown in FIG. 3. FIG. 6 shows a process of generating a service instance and associating the service instance with a port for the organization form shown in FIG. 4. It can be learned that for the two organization forms shown in FIG. 3 and FIG. 4, communication instantiation is the same.

At present, in such communication instantiation scenarios where configuration of receivers is basically the same, some company developers still manually create, one by one, required service instances, provided service instances, and associations between the service instances and ports. In this way, if there are n required service instances, n required service instances need to be manually created, and mapping from a required service instance to the port needs to be configured for n times. This causes low CM configuration efficiency.

According to a configuration method and apparatus provided in embodiments of this application, an element, a property, and an association relationship may be set in advance, to form a template. When facing a single-sender and multi-receiver scenario, a required element, property, and association relationship may be automatically generated based on the template, so that a complex manual configuration process is omitted, and the CM configuration efficiency is improved.

In an embodiment, the set templates are classified based on different communication manners. For example, different templates may be set for scalable service-oriented middleware over internet protocol (scalable service-Oriented middleware over IP, SOME/IP) communication and data distribution service (data distribution service, DDS) communication.

For example, Table 1 shows a service instance template that is set for DDS communication.

**Table 1**

| Property (property) | Value (value) |
|---|---|
| Category (Category) | |
| Checksum (Checksum) | |
| Domain identifier (Domain Id) | 1 |
| Quality of service configuration information (QoS Profile) | min_qos.arxml |
| Receiver service instance identifier (Required Service Instance Id) | 2 |
| Service interface deployment (Service Interface Deployment) | DdsServiceInterfaceDeployment[/ARRoot/Dds ServiceInterfaceDeplyment] |
| Short name (Short Name) | Required_dds_template |
| Timestamp (Timestamp) | |
| Transport plugin information (Transport plugins) | UDP |

It should be understood that values of three properties: Category, Checksum, and Timestamp may be null, or may be set to corresponding values. In an example of Table 1, a null value is used as an example.

In an embodiment, the properties shown in Table 1 and the corresponding values are all optional. The template may also include one or more properties in Table 1, or may further include other properties than the properties shown in Table 1.

For example, Table 2 shows a service instance template that is set for SOME/IP communication.

**Table 2**

| Property (property) | Value (value) |
|---|---|
| Category | |
| Checksum | |
| Required minor version (Required Minor Version) | 1 |
| Required service instance identifier (Required Service Instance Id) | 3 |
| Receiver parameter configuration information (Sd Client Config) | SomeipSdClientServiceInstanceConfig[/ARRoot /SomeipSdClientServiceInstanceConfig] |
| Service Interface Deployment | SomeipServiceInterfaceDeployment[/ARRoot/S omeipServiceInterfaceDeplyment] |
| Short name | Required_someip_template |
| Timestamp | |
| Universally unique identifier (Uuid) | |
| Version driven find behavior (Version Driven Find Behavior) | |

It should be understood that values of five properties: Category, Checksum, Timestamp, Uuid, and Version Driven Find Behavior may be null, or may be set to corresponding values. In an example of Table 2, a null value is used as an example.

It should further be understood that property information of the service instance in the set templates shown in Table 1 and Table 2 is not limited thereto. More or less property information may also be included. A value is also merely an example, and is not limited thereto.

In an embodiment, the properties shown in Table 2 and the corresponding values are all optional. The template may also include one or more properties in Table 2, or may further include other properties than the properties shown in Table 2.

Table 3 shows a template set for an end-to-end communication protection information (E2EprofileConfiguration) property of the service instance.

**Table 3**

| Property (property) | Value (value) |
|---|---|
| Category | |
| Checksum | |
| Clear from valid to invalid (Clear From Valid To Invalid) | False |
| Data identification mode (Data Id Mode) | ALL_16_BIT |
| Maximum delta counter (Max Delta Counter) | |
| Maximum error state initialization value (Max Error State Init) | 1 |
| Maximum error state invalid value (Max Error State Invalid) | 1 |
| Maximum error state valid value (Max Error State Valid) | 1 |
| Minimum ok state initialization value (Min Ok State Init) | 1 |
| Minimum ok state invalid value (Min Ok State Invalid) | 1 |
| Minimum ok state valid value (Min Ok State Valid) | 1 |
| Profile name (Profile Name) | PROFILE_06 |
| Short name | E2EprofileConfiguration |
| Timestamp | |
| Uuid | D 189b00d-580e-424d-a787-8a9f1 db3 eeb2 |
| Window size initialization value (Window Size Init) | 5 |
| Window size invalid value (Window Size Invalid). | 5 |
| Window size valid value (Window Size Valid) | 5 |

It should be understood that values of four properties: Category, Checksum, Max Delta Counter, and Timestamp may be null, or may be set to corresponding values. In an example of Table 3, a null value is used as an example.

It should further be understood that Table 1 and Table 3 may alternatively be integrated into one table, that is, a service instance template set for DDS communication. Table 2 and Table 3 may alternatively be integrated into one table, that is, a service instance template set for SOME/IP communication.

In an embodiment, the properties shown in Table 3 and the corresponding values are all optional. The template may also include one or more properties in Table 3, or may further include other properties than the properties shown in Table 3.

After the service instance is generated and the property of the service instance is configured, mapping from the service instance to the port may be completed based on the set template. Table 4 shows property information of an element ServiceInstanceToPortPrototypeMapping in the set template.

**Table 4**

| Property (property) | Value (value) |
|---|---|
| Category | |
| Checksum | |
| Enable log trace (Enables Log Trace) | |
| Log trace port identifier (Log Trace Port Id) | |
| Process (Process) | ProcessDesign[/ARRoot/ProcessDesign] |
| Service instance (Service Instance) | Dds Required Service Instance[/ARRoot/] |
| Short name | |
| Timestamp | |
| Uuid | |

It should be understood that values of seven properties: Category, Checksum, Enables Log Trace, Log Trace Port Id, Short Name, Timestamp, and Uuid in the properties shown in Table 4 may be null, or may be set to corresponding values. In an example of Table 4, a null value is used as an example.

In an embodiment, the properties shown in Table 4 and the corresponding values are all optional. The template may also include one or more properties in Table 4, or may further include other properties than the properties shown in Table 4.

For example, Table 5 shows property information of a sub-element PortPrototypeInExecutableInstanceRef of ServiceInstanceToPortPrototypeMapping.

**Table 5**

| Property (property) | Value (value) |
|---|---|
| Base information (Base) | Executable[/ARRoot/Executable] |
| Checksum | |
| Context component prototype (Context Component Prototypes) | Sw Component Prototype[/ARRoot//] |
| Context root component prototype (Context Root Sw Component Prototypes) | Root Sw Component Prototype[/ARRoot/Executable/] |
| Target port prototype (Target Port Prototype) | RPort Prototype [/ARRoot/AdaptiveApplicationSwComponentType/] |

It should be understood that a value of Checksum in the properties shown in Table 5 may be null, or may be set to a corresponding value. In an example of Table 5, a null value is used as an example. It should further be understood that property information of elements in the set templates shown in Table 4 and Table 5 is not limited thereto. More or less property information may also be included.

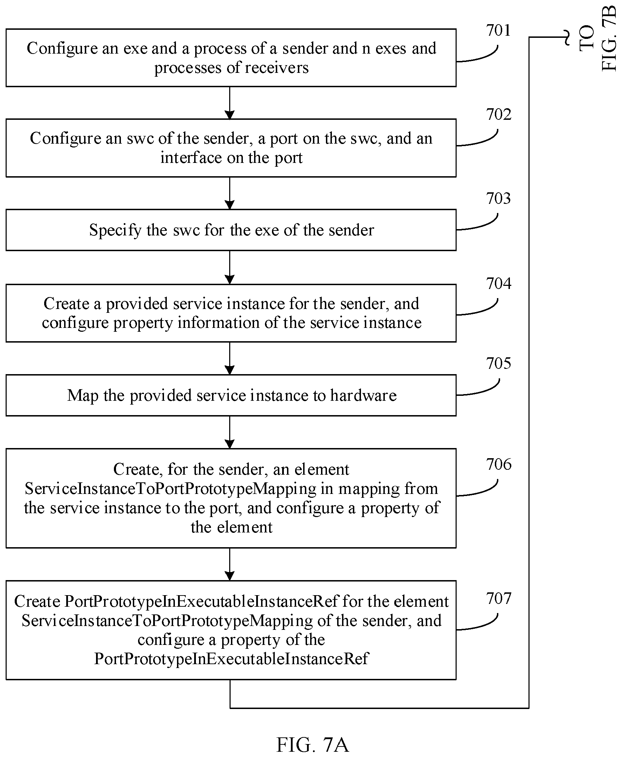

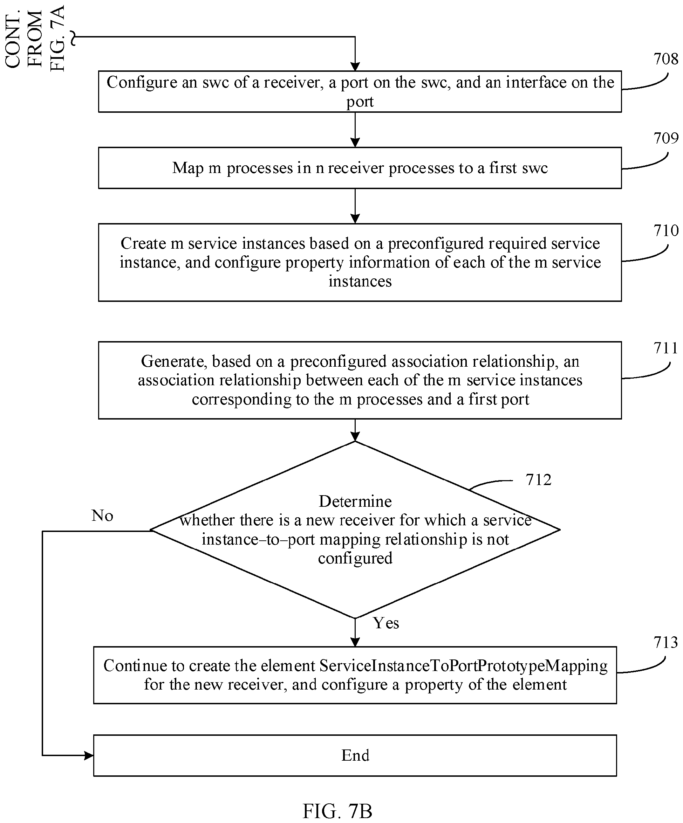

FIG. 7A and FIG. 7B are schematic flowcharts of a configuration method 700 according to an embodiment of this application. As shown in FIG. 7A and FIG. 7B, the method 700 may be used in a configuration apparatus. The method includes:
S701: The configuration apparatus configures an exe and a process of a sender and n exes and processes of receivers, and deploys the exes and the processes into a hardware layer (machine), where n is an integer greater than or equal to 1.

In an embodiment, before configuring the exes and the processes of the sender and the n receivers, the configuration apparatus may further configure a service interface, deployment information of the service interface, a machine, and a network interface.

S702: The configuration apparatus configures an swc of the sender, a port on the swc, and an interface on the port.

S703: The configuration apparatus specifies the swc for the exe of the sender.

In an embodiment, in a single-sender and multi-receiver scenario, because there is only one sender, the process, the exe, and the swc of the sender may be in one-to-one correspondence.

S704: The configuration apparatus creates a provided service instance for the sender and configures property information of the service instance.

In an embodiment, the configuration apparatus may create the service instance for the sender and configure the property information of the service instance after receiving an operation that a user manually creates the provided service instance and configures the property information of the service instance.

In an embodiment, the template shown in Table 1 or Table 2 may alternatively be used for creation of the provided service instance and configuration of the property information. The configuration apparatus may generate the provided service instance based on the template, to help improve provided service instance creation efficiency and property information configuration efficiency in a CM configuration process.

For example, in an example in which the service instance is for DDS communication, when generating the provided service instance, the configuration apparatus (for example, an electronic control unit (electronic control unit, ECU)) may create a provided service instance model, and select a corresponding template (including a correspondence between a property and a value) based on a communication mode of the service instance, to configure property information for the created service instance model. The configuration apparatus may configure property information such as Category, Checksum, Domain Id, QoS Profile, Provided Service Instance Id, Service Interface Deployment, Short Name, Timestamp, and Transport plugins for the provided service instance based on the property information in the template. Further, the configuration apparatus may set a corresponding value for the configured property information based on a correspondence between the property information and the value in the template. After the property information of the provided service instance and the value corresponding to the property information of the provided service instance are configured, generation of the provided service instance is completed.

S705: The configuration apparatus maps the provided service instance to the machine.

S706: The configuration apparatus creates, for the sender, an element ServiceInstanceToPortPrototypeMapping in mapping from the service instance to the port, and configures a property of the element.

In an embodiment, the element ServiceInstanceToPortPrototypeMapping may be used to represent the mapping from the provided service instance to the port.

In an embodiment, the configuration apparatus may create the mapping from the service instance to the port for the sender after receiving the operation that the user manually creates the element ServiceInstanceToPortPrototypeMapping in the mapping from the provided service instance to the port.

In an embodiment, the template shown in Table 4 may alternatively be used for the mapping from the provided service instance to the port. The configuration apparatus may create, based on the template, the element ServiceInstanceToPortPrototypeMapping in the mapping from the provided service instance to the port, to help improve efficiency of creating the mapping from the provided service instance to the port in the CM configuration process.

S707: The configuration apparatus creates PortPrototypeInExecutableInstanceRef for the element ServiceInstanceToPortPrototypeMapping of the sender and configures a property of the PortPrototypeInExecutableInstanceRef.

The PortPrototypeInExecutableInstanceRef is a sub-element of the element ServiceInstanceToPortPrototypeMapping.

S708: The configuration apparatus configures an swc of a receiver, a port on the swc, and an interface on the port.

S709: The configuration apparatus maps m processes in n receiver processes to a first swc, where m is an integer greater than 0 and less than or equal to n.

It should be understood that a mapping process from a process to an exe is not specifically limited in embodiments of this application. For example, as shown in FIG. 3 and FIG. 4, when there are three receiver processes, a process 1 and a process 2 in the three receiver processes may be mapped to an exe 1, and a process 3 may be mapped to another exe 2.

In an embodiment, n and m may be equal. The configuration apparatus may specify a unified swc for the n receiver processes by using a composite swc. For a specific manner, refer to FIG. 4. For example, the process 1, the process 2, and the process 3 may all be mapped to an swc 1.

In an embodiment, the configuration apparatus may alternatively map the n receiver processes to the first swc based on swc information associated with a preconfigured required service instance. The configuration apparatus may specify a root component (rootswc) of the exe of the receiver as a composite swc and create a sub-element of the composite swc. The configuration apparatus may point a type (type) of this sub-element to an swc associated with the preconfigured required service instance.

In an embodiment, m may be less than n. The configuration apparatus may alternatively map some processes in the n processes to the first swc. For a specific manner, refer to FIG. 3. For example, the process 1 and the process 2 may be mapped to the swc 1.

S710: The configuration apparatus creates m service instances based on the preconfigured required service instance, and configures property information of each of the m service instances.

The configuration apparatus may generate a corresponding quantity of required service instances based on a quantity of processes mapped to the first swc, and create property information of each required service instance.

For example, if the n processes are all mapped to the first swc, the configuration apparatus may create n required service instances based on the preconfigured service instance, and configure property information of each of the n required service instances.

For example, if m processes in the n processes (n is greater than m) are all mapped to the first swc, the configuration apparatus may create m required service instances based on the preconfigured service instance, and configure property information of each of the m required service instances. In an embodiment, the preconfigured service instance may be shown in Table 1, or the preconfigured service instance may be shown in Table 2, or the preconfigured service instance may be shown in Table 1 and Table 3, or the preconfigured service instance may be shown in Table 2 and Table 3.

In an embodiment, the preconfigured required service instance may also only include property information that needs to be configured. For example, the preconfigured required service instance may include two pieces of property information: Required Service Instance Id and Service Interface Deployment. The configuration apparatus may configure the property information of the required service instance and the value corresponding to the property information of the required service instance based on the property information of the provided service instance, the value corresponding to the property information of the provided service instance, and the preconfigured required service instance. For example, the property information of the provided service instance includes Provided Service Instance Id and Service Interface Deployment, and values corresponding to the Provided Service Instance Id and Service Interface Deployment are 2 and DdsServiceInterfaceDeployment[/ARRoot/DdsServiceInterfaceDeplyment] respectively. In this case, the configuration apparatus may configure the property information: Required Service Instance Id and Service Interface Deployment of the required service instance based on the preconfigured service instance, and configure, based on the values corresponding to the two pieces of property information: Provided Service Instance Id and Service Interface Deployment in the provided service instance, that a value corresponding to the Required Service Instance Id in the required service instance is 2, and a value corresponding to the Service Interface Deployment in the required service instance is DdsServiceInterfaceDeployment[/ARRoot/DdsServiceInterfaceDeplyment].

S711: The configuration apparatus generates, based on a preconfigured association relationship, an association relationship between each of the m service instances corresponding to the m processes and a first port.

In an embodiment, the preconfigured association relationship includes reference information of a process, a port, and a service instance, and a correspondence between the process, the port, and the service instance.

For example, reference information of the process in the preconfigured association relationship is a process 1, a process 2, and a process 3. Reference information of the port is a port 1. Reference information of the service instance is a short name (short name) of the service instance, for example, an instance 1, an instance 2, and an instance 3. The correspondence between the process, the port, and the service instance may be shown in Table 6. The process 1, the port 1, and the instance 1 are in one-to-one correspondence. The process 2, the port 1, and the instance 2 are in one-to-one correspondence. The process 3, the port 1, and the instance 3 are in one-to-one correspondence.

**Table 6**

| Process (process) | Port | Short name property of a service instance (instance) |
|---|---|---|
| Process 1 | Port 1 | Instance 1 |
| Process 2 | | Instance 2 |
| Process 3 | | Instance 3 |
| ... | ... | ... |

For example, the configuration apparatus creates three processes (process 1, process 2, and process 3) for the receiver, and maps all the three processes to the port 1. The configuration apparatus may generate three required service instances (an instance 1, an instance 2, and an instance 3). Based on the correspondence between the process, the port, and the service instance shown in Table 6, the configuration apparatus may map the instance 1 to the port 1 and point a processDesign of the instance 1 to the process 1; map the instance 2 to the port 1 and point a processDesign of the instance 2 to the process 2; and map the instance 3 to the port 1 and point a processDesign of the instance 3 to the process 3.

For example, the reference information of the process in the preconfigured association relationship is the process 1 and the process 2. The reference information of the port is the port 1. The reference information of the service instance may be deployment property information of the service instance. The service instances may be classified into an instance in a SOMP/IP communication mode and an instance in a DDS communication mode based on the deployment property information. The correspondence between the process, the port, and the service instance may be shown in Table 7. The process 1, the port 1, and the instance in the SOMP/IP communication mode are in one-to-one correspondence. The process 2, the port 1, and the instance in the DDS communication mode are in one-to-one correspondence.

**Table 7**

| Process (process) | Port | Deployment property of a service instance (instance) |
|---|---|---|
| Process 1 | Port 1 | Instance in a SOMP/IP communication mode |
| Process 2 | | Instance in a DDS communication mode |
| ... | ... | ... |

After the configuration apparatus generates the m service instances and configures the property information of each of the m service instances, the mapping from each of the m service instances to the port may be completed based on the process number, the port number, the deployment property in the property information of each service instance, and the correspondence between the process, the port, and the service instance.

For example, the configuration apparatus creates two processes (the process 1 and the process 2) for the receiver, and maps both the two processes to the port 1. The configuration apparatus may generate two required service instances (the instance in the SOME/IP communication mode and the instance in the DDS communication mode). Based on the correspondence between the process, the port, and the service instance shown in Table 7, the configuration apparatus may map the instance in the SOME/IP communication mode to the port 1 and point a processDesign of the instance in the SOME/IP communication mode to the process 1; and map the instance in the DDS communication mode to the port 1 and point a processDesign of the instance in the DDS communication mode to the process 2.

In an embodiment, the preconfigured association relationship may be shown in Table 6 or Table 7. The configuration apparatus may generate an association relationship between the service instance and the port based on the preconfigured association relationship shown in Table 6 or Table 7. For example, taking the preconfigured association shown in Table 6 as an example, the association relationship that is generated by the configuration apparatus and that is between the instance 1 and the port 1 may be represented by property information of an element ServiceInstanceToPortPrototypeMapping shown in Table 8 and a value corresponding to the property information of the element ServiceInstanceToPortPrototypeMapping shown in Table 8, and property information of a sub-element PortPrototypeInExecutableInstanceRef shown in Table 9 and a value corresponding to the property information of the sub-element PortPrototypeInExecutableInstanceRef shown in Table 9.

**Table 8**

| Property (property) | Value (value) |
|---|---|
| Process | Process 1 |
| Service Instance | Instance 1 |
| ... | ... |

**Table 9**

| Property (property) | Value (value) |
|---|---|
| Target port prototype | Port 1 |
| ... | ... |

It should be understood that a value corresponding to property information Process and a value corresponding to property information Service Instance in the element ServiceInstanceToPortPrototypeMapping shown in Table 8 may be used to represent an association relationship between the process 1 and the instance 1. Property information Target Port Prototype in the sub-element PortPrototypeInExecutableInstanceRef shown in Table 9 may be used to represent information about a port (the port 1) associated with the process 1 and the instance 1.

It should further be understood that the association relationship that is generated by the configuration apparatus and that is between the instance 1 and the port 1 may be represented by the property information of the element ServiceInstanceToPortPrototypeMapping shown in Table 8 and the value corresponding to the property information of the element ServiceInstanceToPortPrototypeMapping shown in Table 8, and the property information of the sub-element PortPrototypeInExecutableInstanceRef shown in Table 9 and the value corresponding to the property information of the sub-element PortPrototypeInExecutableInstanceRef shown in Table 9, or may be represented by a property of one element and a value corresponding to the property of the element. For example, Table 10 shows that the association relationship that is generated by the configuration apparatus and that is between the instance 1 and the port 1 is represented by using the element ServiceInstanceToPortPrototypeMapping.

**Table 10**

| Property (property) | Value (value) |
|---|---|
| Process | Process 1 |
| Service instance | Instance 1 |
| Target port prototype | Port 1 |
| ... | ... |

It should be understood that Table 8 to Table 10 may further include more property information and information about corresponding values. This is not limited in embodiments of this application. S712: Determine whether there is a new receiver for which a service instance-to-port mapping relationship is not configured.

In an embodiment, if there is no new receiver for which the service instance-to-port mapping relationship is not configured, a configuration procedure ends; otherwise, S713 is performed. S713: If there is a new receiver for which the service instance-to-port mapping relationship is not configured, continue to create the element ServiceInstanceToPortPrototypeMapping for the new receiver, and configure a property of the element.

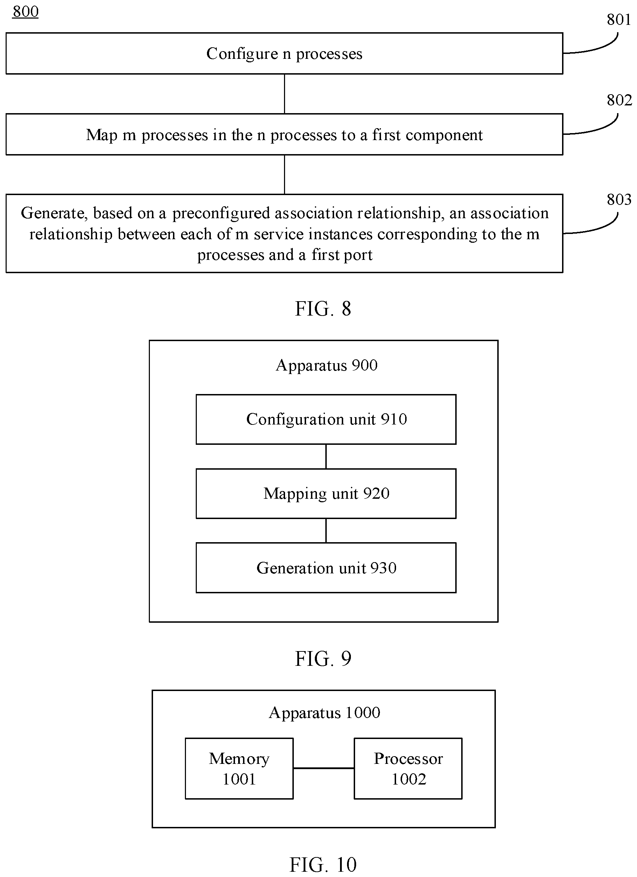

FIG. 8 is a schematic flowchart of a configuration method 800 according to an embodiment of this application. As shown in FIG. 8, the method 800 includes:
S801: A configuration apparatus configures n processes, where n is an integer greater than or equal to 1.

Optionally, the n processes may be sender processes.

Optionally, the n processes may be receiver processes.

S802: The configuration apparatus maps m processes in the n processes to a first component, where m is an integer greater than 0 and less than or equal to n, and the first component is associated with a first port.

Optionally, that the configuration apparatus maps m processes in the n processes to a first component includes: The configuration apparatus maps the m processes to a first executable program exe, where a root component of the first executable program exe is a first composite component; and creates a first sub-element of the first composite component, where a type of the first sub-element points to the first component.

For example, as shown in FIG. 4, a process 1, a process 2, and a process 3 may be mapped to an swc 1 by using a composite swc.

S803: The configuration apparatus generates, based on a preconfigured association relationship, an association relationship between each of the m service instances corresponding to the m processes and the first port.

Optionally, if a plurality of processes are mapped to the first component by using the composite swc, the preconfigured association relationship may be represented by property information of an element ServiceInstanceToPortPrototypeMapping shown in Table 4 and property information of a sub-element of ServiceInstanceToPortPrototypeMapping shown in Table 5.

Optionally, the preconfigured association relationship includes reference information of a process, a port, and a service instance, and a correspondence between the process, the port, and the service instance.

Optionally, the reference information of the process may be a process number.

Optionally, the reference information of the port may be a port number.

Optionally, the reference information of the service instance may be property information in the service instance. The property information may include one or both of a short name (short name) and deployment (deployment).

For example, the preconfigured association relationship may be shown in Table 6 or Table 7.

For example, as shown in Table 6, the reference information of the process may include the process number. The reference information of the port may include the port number. The reference information of the service instance may include the short name in the property information of the service instance. The correspondence may include that the process 1, the port 1, and the instance 1 are in one-to-one correspondence, the process 2, the port 1, and the instance 2 are in one-to-one correspondence, and the process 3, the port 1, and the instance 3 are in one-to-one correspondence. In this way, the configuration apparatus may create an association relationship among the process, the port, and the service instance based on the foregoing reference information and the correspondence. For example, the association relationship that is created by the configuration apparatus and that is among the process, the port, and the service instance may be shown in Table 8 and Table 9, or may be shown in Table 10.

For example, as shown in Table 7, the reference information of the process may include the process number. The reference information of the port may include the port number. The reference information of the service instance may include deployment in the property information of the service instance. The correspondence may include that the process 1, the port 1, and an instance in a SOMP/IP communication mode are in one-to-one correspondence, and the process 2, the port 1, and an instance in a DDS communication mode are in one-to-one correspondence. In this way, the configuration apparatus may create the association relationship among the process, the port, and the service instance based on the foregoing reference information and correspondence. Optionally, before the generating an association relationship between each of m service instances corresponding to the m processes and the first port, the method further includes: generating the m service instances based on a preconfigured service instance, and configuring property information of each of the m service instances.

For example, the preconfigured service instance may be shown in Table 1, or the preconfigured service instance may be shown in Table 2.

For example, the configuration apparatus may generate a plurality of service instances for a plurality of processes based on the preconfigured service instance, and configure property information of each of the plurality of service instances. A value of a short name property in the property information of each service instance may be different. For example, a value of a short name property of a generated service instance 1 may be Required_dds_1. A value of a short name property of a generated service instance 2 may be Required_dds_2. A value of a short name property of a generated service instance 3 may be Required_dds_3.

For example, the deployment property in the property information of each service instance may be different. For example, a value of a deployment property of a generated service instance may be DdsServiceInterfaceDeployment[/ARRoot/DdsServiceInterfaceDeplyment]. A value of a deployment property of another generated service instance may be SomeipServiceInterfaceDeployment[/ARRoot/SomeipServiceInterfaceDeplyment].

It should be understood that if the configuration apparatus generates a plurality of required service instances by using the preconfigured service instance and configures property information of each of the plurality of required service instances, an Instance Id property of each required service instance may be the same as an instance Id property of a provided service instance, so as to facilitate communication between a sender and a receiver.

For example, the preconfigured service instance may also be shown in Table 1 and Table 3; or the preconfigured service instance may further be shown in Table 2 and Table 3.

Optionally, n is greater than or equal to 2, and the n processes are receiver processes.

For example, in a single-sender and multi-receiver scenario shown in FIG. 2, the n processes may include the process 1, the process 2, and the process 3. The process 1, the process 2, and the process 3 may be receiver processes.

Optionally, the preconfigured service instance includes a first preconfigured service instance and a second preconfigured service instance. The first preconfigured service instance may be a service instance for scalable service-oriented middleware over internet protocol SOME/IP communication. The second preconfigured service instance may be a service instance for data distribution service DDS communication.

In this embodiment of this application, different service instance templates may be configured in advance for service instances in different communication modes. In this way, when the service instances are generated, the service instances may be generated based on the different service instance templates, and the property information of the service instances may be configured. This helps improve configuration flexibility.

Optionally, the property information of each service instance includes one or more of identification information, transport plugin information, deployment information, quality of service configuration information, and end-to-end communication protection information of the service instance.

FIG. 9 is a schematic block diagram of a configuration apparatus 900 according to an embodiment of this application. As shown in FIG. 9, the apparatus 900 includes:
a configuration unit 910, configured to configure n processes, where n is an integer greater than or equal to 1;
a mapping unit 920, configured to map m processes in the n processes to a first component, where m is an integer greater than 0 and less than or equal to n, and the first component is associated with a first port; and
a generation unit 930, configured to generate, based on a preconfigured association relationship, an association relationship between each of m service instances corresponding to the m processes and the first port.

Optionally, the preconfigured association relationship includes reference information of a process, a port, and a service instance, and a correspondence between the process, the port, and the service instance.

Optionally, the generation unit 930 is further configured to: before generating the association relationship between each of the m service instances corresponding to the m processes and the first port, generate the m service instances based on a preconfigured service instance; and configure property information of each of the m service instances.

Optionally, the mapping unit 920 is specifically configured to: map the m processes to a first executable program exe, where a root component of the first executable program exe is a first composite component; and create a first sub-element of the first composite component, where a type of the first sub-element points to the first component.

Optionally, n is greater than or equal to 2, and the n processes are receiver processes.

Optionally, the preconfigured service instance includes a first preconfigured service instance and a second preconfigured service instance. The first preconfigured service instance is a service instance for scalable service-oriented middleware over internet protocol SOME/IP communication. The second preconfigured service instance is a service instance for data distribution service DDS communication.

Optionally, the property information of each service instance includes one or more of identification information, transport plugin information, deployment information, quality of service configuration information, and end-to-end communication protection information of the service instance.

FIG. 10 is a schematic block diagram of a configuration apparatus 1000 according to an embodiment of this application. The apparatus 1000 includes: a memory 1001, configured to store computer instructions; and a processor 1002, configured to execute the computer instructions stored in the memory, so that the apparatus 1000 performs the foregoing configuration method.

An embodiment of this application further provides a terminal device. The terminal device may include the foregoing apparatus 900 or apparatus 1000.

An embodiment of this application further provides a computer program product. The computer program product includes computer program code. When the computer program code is run on a computer, the computer is enabled to perform the method performed by a vehicle.

An embodiment of this application further provides a computer-readable medium. The computer-readable medium stores program code. When the computer program code is run on a computer, the computer is enabled to perform the foregoing method.

In an implementation process, steps of the foregoing method may be implemented by using an integrated logic circuit of hardware in a processor or instructions in a form of software. The method disclosed with reference to embodiments of this application may be directly performed by a hardware processor, or may be performed by using a combination of hardware in the processor and a software module. The software module may be located in a mature storage medium in the art such as a random access memory, a flash memory, a read-only memory, a programmable read-only memory, an electrically erasable programmable memory, or a register. The storage medium is located in the memory. A processor reads information in the memory and completes steps of the foregoing method in combination with hardware of the processor. To avoid repetition, details are not described herein again.

It should be understood that, in embodiments of this application, the processor may be a central processing unit (central processing unit, CPU). The processor may further be another general purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general purpose processor may be a microprocessor, or the processor may be any conventional processor or the like.

It should further be understood that in embodiments of this application, the memory may include a read-only memory and a random access memory, and provide instructions and data to the processor.

In embodiments of this application, "first", "second", and various numbers are merely used for differentiation for ease of description and are not intended to limit the scope of embodiments of this application. For example, different pipes, through holes, and the like are differentiated.

It should be understood that sequence numbers of the foregoing processes do not mean execution sequences in various embodiments of this application. The execution sequences of the processes should be determined according to functions and internal logic of the processes, and should not be construed as any limitation on implementation processes of embodiments of this application.

A person of ordinary skill in the art may be aware that units and algorithm steps in examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or a part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A configuration method, comprising:
configuring n processes, wherein n is an integer greater than or equal to 1;
mapping m processes in the n processes to a first component, wherein m is an integer greater than 0 and less than or equal to n, and the first component is associated with a first port; and
generating, based on a preconfigured association relationship, an association relationship between each of m service instances corresponding to the m processes and the first port.

2. The method according to claim 1, wherein the preconfigured association relationship comprises reference information of a process, a port, and a service instance, and a correspondence between the process, the port, and the service instance.

3. The method according to claim 1 or 2, wherein before the generating an association relationship between each of m service instances corresponding to the m processes and the first port, the method further comprises:
generating the m service instances based on a preconfigured service instance, and configuring property information of each of the m service instances.

4. The method according to any one of claims 1 to 3, wherein the mapping m processes in the n processes to a first component comprises:
mapping the m processes to a first executable program exe, wherein a root component of the first executable program exe is a first composite component; and
creating a first sub-element of the first composite component, wherein a type of the first sub-element points to the first component.

5. The method according to any one of claims 1 to 4, wherein n is greater than or equal to 2, and the n processes are receiver processes.

6. The method according to any one of claims 1 to 5, wherein the preconfigured service instance comprises a first preconfigured service instance and a second preconfigured service instance, the first preconfigured service instance is a service instance for scalable service-oriented middleware over internet protocol SOME/IP communication, and the second preconfigured service instance is a service instance for data distribution service DDS communication.

7. The method according to any one of claims 1 to 6, wherein the property information of each service instance comprises one or more of identification information, transport plugin information, deployment information, quality of service configuration information, and end-to-end communication protection information of the service instance.

8. A configuration apparatus, comprising:
a configuration unit, configured to configure n processes, wherein n is an integer greater than or equal to 1;
a mapping unit, configured to map m processes in the n processes to a first component, wherein m is an integer greater than 0 and less than or equal to n, and the first component is associated with a first port; and
a generation unit, configured to generate, based on a preconfigured association relationship, an association relationship between each of m service instances corresponding to the m processes and the first port.

9. The apparatus according to claim 8, wherein the preconfigured association relationship comprises reference information of a process, a port, and a service instance, and a correspondence between the process, the port, and the service instance.

10. The apparatus according to claim 8 or 9, wherein the generation unit is further configured to: before generating the association relationship between each of the m service instances corresponding to the m processes and the first port, generate the m service instances based on a preconfigured service instance; and configure property information of each of the m service instances.

11. The apparatus according to any one of claims 8 to 10, wherein the mapping unit is specifically configured to:
map the m processes to a first executable program exe, wherein a root component of the first executable program exe is a first composite component; and
create a first sub-element of the first composite component, wherein a type of the first sub-element points to the first component.

12. The apparatus according to any one of claims 8 to 11, wherein n is greater than or equal to 2, and the n processes are receiver processes.

13. The apparatus according to any one of claims 8 to 12, wherein the preconfigured service instance comprises a first preconfigured service instance and a second preconfigured service instance, the first preconfigured service instance is a service instance for scalable service-oriented middleware over internet protocol SOME/IP communication, and the second preconfigured service instance is a service instance for data distribution service DDS communication.

14. The apparatus according to any one of claims 8 to 13, wherein the property information of each service instance comprises one or more of identification information, transport plugin information, deployment information, quality of service configuration information, and end-to-end communication protection information of the service instance.

15. A configuration apparatus, comprising:
a memory, configured to store computer instructions; and
a processor, configured to execute the computer instructions stored in the memory, so that the apparatus performs the method according to any one of claims 1 to 7.

16. A computer-readable storage medium, wherein the computer-readable medium stores program code; and when the program code is run on a computer, the computer is enabled to perform the method according to any one of claims 1 to 7.
